# EUROPEAN PATENT APPLICATION

(11) **EP 1 471 316 A1**
(43) Date of publication of application: **27.10.2004**
(21) Application number: 03101100.0
(22) Date of filing: 22.04.2003
(51) Int. Cl.: F25B 13/00, F25B 41/04, F16K 11/052, B60H 1/00

(54) **Reversible heat pump system**

(71) Applicant: Delphi Technologies, Inc., Troy, MI 48007 (US)
(72) Inventor: HEYS, Malcolm, S., 8053, Bertrange (LU)
(74) Representative: Beissel, Jean

(57) **Abstract**

The present method relates to a reversible heat pump system (10) comprising a compressor (12), an outside heat exchanger (16), an expansion device (18) and an inside heat exchanger (20) connected in series, with a refrigerant circulating in the heat pump system (10); and a first four-way valve (14) for directing the refrigerant from a discharge port (21) of the compressor (12) to the inside heat exchanger (20), respectively the outside heat exchanger (16), and for directing the refrigerant from the outside heat exchanger (16), respectively the inside heat exchanger (20), to a suction port (29) of the compressor (12). The reversible heat pump system (10) further comprises a second four-way valve (30) for directing the refrigerant from the inside heat exchanger (20), respectively the outside heat exchanger (16), to an inlet port (32) of the expansion device (18) and for directing the refrigerant from an outlet port (34) of the expansion device (18) to the outside heat exchangers (16), respectively the inside heat exchanger (20).

## Description

### Field of the invention

The present invention generally relates to a reversible heat pump system, in particular for use in an automotive vehicle.

### Background of the invention

Reversible heat pump systems generally comprise a compressor, an inside heat exchanger, an expansion device and an outside heat exchanger connected in series.

In a typical heat pump system, the compressor compresses a refrigerant in a vapor state. The compressed refrigerant, at high temperature and pressure, enters a condenser where heat is removed from the compressed refrigerant and the refrigerant changes to a liquid state. The refrigerant then travels through an expansion device, which throttles the refrigerant as the refrigerant flows through an orifice, which causes the refrigerant to change phase from liquid to a saturated liquid/vapor mixture. The mixture then enters an evaporator, where heat is drawn from the environment, thus cooling the environmental air and causing the refrigerant to change to a vapor state. The low-pressure refrigerant flow from the evaporator returns to the suction side of the compressor to begin the cycle anew.

Depending on the flow direction of the refrigerant through the system, one of the inside and outside heat exchangers acts as condenser, while the other one acts as evaporator.

A reversible heat pump system, i.e. a heat pump system that can be operated in heating or cooling mode, is e.g. disclosed in US patent 4,991,405. This heat pump system comprises an inside heat exchanger, an outside heat exchanger, a compressor and a four-way valve. First, second, third and fourth ports of the four-way valve are connected to a discharge port of the compressor, the inside heat exchanger, the outside heat exchanger and a suction port of the compressor, respectively. A first check valve and a first expansion valve are disposed in series between the inside and outside heat exchangers. A second check valve and the second expansion valve are also disposed in series between the inside and outside heat exchangers. The first check valve and a first expansion valve are parallel with the second check valve and the second expansion valve.

In operation, in response to a demand to cool a passenger compartment, the four-way valve is switched to configure the heat pump system to operate in cooling mode. In this configuration, the inside heat exchanger is used as an evaporator and the outside heat exchanger is used as a condenser. The four-way valve directs the refrigerant from the compressor to the outside heat exchanger, where the refrigerant condenses. The refrigerant then flows through the first check valve to the first expansion valve where the refrigerant expands. The refrigerant then flows through the inside heat exchanger, where it evaporates, before reaching the four-way valve, which directs the refrigerant back to the compressor.

On the other hand, in response to a demand to heat the passenger compartment, the four-way valve is switched to configure the heat pump system to operate in heating mode. In this configuration, the inside heat exchanger is used as a condenser and the outside heat exchanger is used as an evaporator. The four-way valve directs the refrigerant from the compressor to the inside heat exchanger, where the refrigerant condenses. The refrigerant then flows through the second check valve to the second expansion valve where the refrigerant expands. The refrigerant then flows through the outside heat exchanger, where it evaporates, before reaching the four-way valve, which directs the refrigerant back to the compressor.

Although the present heat pump system can be operated in cooling mode and in heating mode, a disadvantage of the system is that at least two check valves are used to direct the refrigerant through the two expansion valves. Such a system is both complex and expensive.

### Object of the invention

The object of the present invention is to provide a reversible heat pump system that does not have the abovementioned drawbacks.

This object is achieved by a reversible heat pump system according to claim 1, wherein the heat pump system comprises a compressor, an inside heat exchanger, an expansion device and an outside heat exchanger connected in series with a refrigerant circulating in the heat pump system; and a first four-way valve for directing the refrigerant from a discharge port of the compressor to the inside heat exchanger, the outside heat exchanger, and for directing the refrigerant from the outside heat exchanger, respectively the inside heat exchanger, to a suction port of the compressor. According to an important aspect of the invention, the reversible heat pump system further comprises a second four-way valve directing the refrigerant the inside heat exchanger, respectively the outside heat exchanger, to an inlet port of the expansion device and for directing the refrigerant from an outlet port of the expansion device to the outside heat exchanger, respectively the inside heat exchanger.

Due to the second four-way valve, refrigerant always flows through the expansion device in the same direction. A single expansion device is sufficient and there is no need to provide a complex arrangement of check valves for directing the refrigerant depending on the operating mode of the reversible heat pump system. In case further components are arranged upstream or downstream of the expansion device, upstream components do not happen to be located downstream of the expansion device when the refrigerant flow through the heat pump system is reversed, and vice versa. Due to the reduced number of valves and expansion devices, the reversible heat pump system according to the present invention is simpler in design and also less expensive. Furthermore, as the number of components is reduced, the potential for malfunctioning of the system is also reduced. Finally, the reduced number of components also entails a reduced weight of the system, which is particularly advantageous in the automobile industry.

Preferably, the first four-way valve is an controlled valve, and the second four-way valve is a self-acting valve. Depending on which operating mode is desired, a control system can switch the first four-way valve so as to either direct the refrigerant from the compressor to the inside or the outside heat exchanger. The second four-way valve however does not need to be actively actuated by any control system. Depending on the direction of flow through the system, as determined by the first four-way valve, the second four-way valve automatically switches so as to deliver the refrigerant from the heat exchanger supplied with refrigerant from the compressor to the inlet port of the expansion device and so as to direct the refrigerant from the outlet port of the expansion device to the other heat exchanger.

The second four-way valve can comprise a first circuit port for connecting to the outside heat exchanger; a second circuit port for connecting to the inside heat exchanger; an outlet port for connecting to an inlet port of the expansion device; and an inlet port for connecting to an outlet port of the expansion device. The second four-way valve can further comprise a flap element pivotable between two end positions, wherein, in a first end position, the first circuit port is in fluid communication with the outlet port and the second circuit port is in fluid communication with the inlet port, and in a second end position, the second circuit port is in fluid communication with the outlet port and the first circuit port is in fluid communication with the inlet port, and wherein the flap element is brought into the or second end positions through a pressure difference between the refrigerant at the first circuit port and the refrigerant at the second circuit port. The refrigerant being delivered to the second four-way valve from the compressor, via one of the heat exchangers, is always at high pressure, whereas the refrigerant being delivered to the second four-way valve from the outlet port of the expansion device is always at low pressure. Due to the pressure difference at these two ports, the flap element is automatically brought into one of its two end positions, whereby the second four-way valve is automatically switched into one of its operating modes.

The flap element preferably has an off-centre pivot, so as to aid the flap element to be brought into the respective end position.

Advantageously, first and second, resp. third and fourth, sealing means are arranged in the second four-way valve for sealing a high-pressure and a low-pressure side within the second four-way valve when the flap element is in its first, resp. second, end position. By providing such sealing means, leakage of high-pressure refrigerant from the high-pressure side to the low-pressure side of the second four-way valve can be reduced. The efficiency of the heat pump system is thereby maintained.

The heat pump system preferably further comprises a further inside heat exchanger, the inside heat exchanger and the further inside heat exchanger being arranged in parallel, wherein flow of refrigerant through the inside heat exchanger is in a first and flow of refrigerant through the further inside heat exchanger is in a second direction opposite to the first direction, the direction of flow through the respective heat exchanger being determined by means of valves. One of the inside heat exchangers can then be configured so as to exclusively operate as condenser, whereas the other one of the inside heat exchangers can be configured so as to exclusively operate as evaporator.

According to one embodiment, both of the inside heat exchanger and the further inside heat exchanger connected to a circuit port of the first four-way valve; and second valves are associated with the inside heat exchanger; and and fourth valves are associated with the further inside heat exchanger. The first valve is arranged upstream of the inside heat exchanger and the second valve is arranged downstream of the inside heat exchanger, The third valve is arranged upstream of the inside heat exchanger, the fourth valve is arranged downstream of the further inside heat exchanger. The inside heat exchanger and the further inside heat exchanger are both connected to the second circuit port of the first four-way valve. By opening the first and second valves and closing the third and fourth valves, the refrigerant is forced to flow through the inside heat exchanger and prevented from flowing through the further inside heat exchanger. Similarly, by closing the first and second valves and opening the third and fourth valves, the refrigerant is forced to flow through the further inside heat exchanger and prevented from flowing through the inside heat exchanger.

According to another embodiment, one of the inside neat exchanger and the further inside heat exchanger is connected to a circuit port of the first four-way valve, the other one being connected to an outlet port of the first four-way valve, a check valve is associated with one of the inside heat exchanger and the further inside heat exchanger; and a solenoid valve is associated with the other one of the inside heat exchanger and the further inside heat exchanger. It is thereby possible to provide only one valve per inside heat exchanger. A reduction in the number of valves reduces cost and weight of the system.

Advantageously, an internal heat exchanger is fluidly arranged between the second four-way valve and an inlet port of the expansion device, and between the first four-way valve and a suction port of the compressor. Such an internal heat exchanger, sometimes also referred to as superheater, generally comprises a high-pressure inlet for receiving refrigerant from the second four-way valve; a high-pressure outlet for delivering refrigerant to the expansion device; a low-pressure inlet for receiving refrigerant from the first four-way valve; and a low-pressure outlet for delivering refrigerant to the compressor. The internal heat exchanger removes heat from a region between the heat exchanger acting as condenser and the expansion device and transfers it to a region between the heat exchanger acting as evaporator and the compressor. More heat can be dissipated in the evaporator, thereby improving the efficiency of the heat pump system.

Preferably, the heat pump system further comprises an accumulator/dehydrator device fluidly arranged between the first four-way valve and a suction port of the compressor. Such an accumulator/dehydrator device stores excess liquid refrigerant coming from the heat exchanger acting as evaporator. Indeed, compressors are designed to compress gaseous refrigerant and not liquid refrigerant. The chief role of the accumulator/dehydrator device is to isolate the compressor from any damaging liquid refrigerant. The accumulator/dehydrator device also removes debris or moisture from the system. Moisture should be removed from the system because it can mix with the refrigerant and form a corrosive acid, which can damage the system. Furthermore, moisture can freeze in the expansion device and thereby block the flow of refrigerant therethrough.

The refrigerant can e.g. be R -12, R-134a, R152a of CO₂. It will be understood that when the refrigerant is CO₂, the condenser referred to in this application is replaced by a gascooler.

The expansion device can be an electronic expansion valve, a thermal expansion valve or an orifice tube.

When the expansion device is a thermal expansion valve, the latter preferably comprises means for sensing temperature and pressure of the refrigerant upstream of a suction port of the compressor. Temperature and pressure can be sensed anywhere between the outlet port of the first four-way valve and the suction port of the compressor.

### Brief description of the drawings

The present invention will be more apparent from the following description of a not limiting embodiment with reference to the attached drawings, wherein
- Fig.1: is a schematic view of a heat pump system according to a first embodiment of the invention operating a) in cooling mode or b) in heating mode;
- Fig.2: is an enlarged schematic view of a second four-way valve of the heat pump system operating a) in cooling mode or b) in heating mode;
- Fig.3: is a schematic view of a heat pump system according to a second embodiment of the invention operating a) in cooling mode or b) in heating mode; and
- Fig.4: is a schematic view of a heat pump system according to a third embodiment of the invention operating a) in cooling mode or b) in heating mode.

### Detailed description of a preferred embodiment

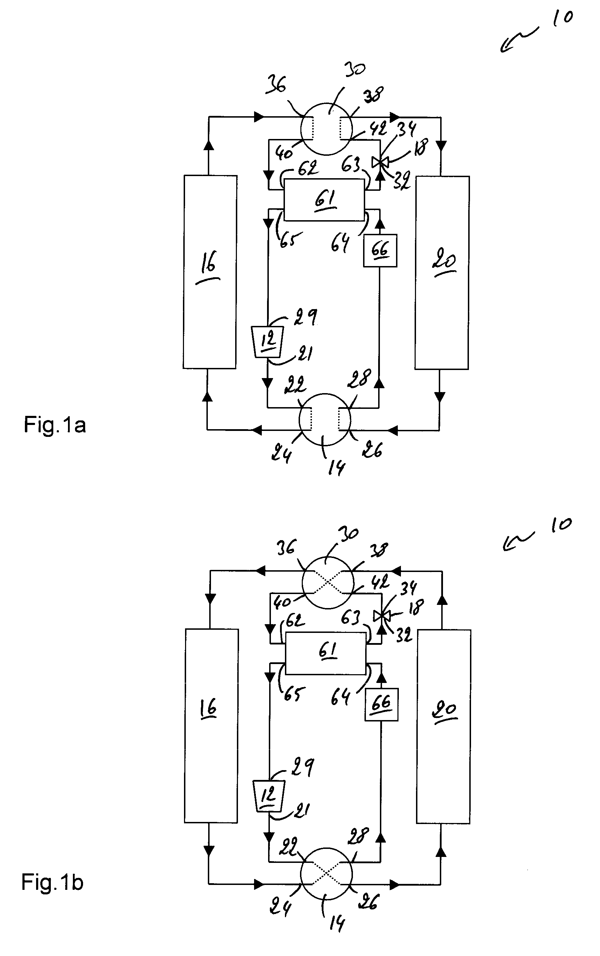

Fig.1 shows a heat pump system, which can e.g. be installed in an automotive vehicle and which can operate in cooling mode, as shown in Fig.1 a, or in heating mode, as shown in Fig.1b.

Such a reversible heat pump system 10 comprises a compressor 12, a first four-way valve 14, an outside heat exchanger 16, an expansion device 18 and an inside heat exchanger 20. The different elements 12, 14, 16, 18, 20 are connected in series by fluid pipes and form a closed circuit wherein a refrigerant can circulate. The refrigerant exits a discharge port 21 of the compressor 12 under high pressure and enters the first four-way valve 14 via an inlet port 22, which determines the direction of the refrigerant in the circuit.

The direction of refrigerant flow through the expansion device 18 can be of importance, e.g. if a unidirectional expansion device is used or if further elements are arranged either upstream or downstream of the expansion device 18. In order to ensure that, no matter what operating mode the heat pump system 10 is operated in, refrigerant flow through the expansion device 18 is always in the same direction, a second four-way valve 30 is arranged between the heat exchangers 16, 20 and the expansion device 18. Such a second four-way valve 30 receives refrigerant from one of the heat exchangers 16, 20 and delivers it to an inlet port 32 of the expansion device 18; it further receives the refrigerant from an outlet port 34 of the expansion device 18 and delivers it to the other one of the heat exchangers 16, 20.

In cooling mode (Fig.1a), i.e. when the inside compartment of the vehicle is to be cooled, the first four-way valve 14 is switched such that the refrigerant exits the first four-way valve 14 via a first circuit port 24 for the outside heat exchanger 16, where it is cooled. The refrigerant then flows to the second four-way valve 30, which leads the refrigerant to the expansion device 18, where it expands and drops in pressure. From the expansion device 18, the refrigerant is led back to the second four-way valve 30 and to the inside heat exchanger 20 where it evaporates. The refrigerant then flows back to the first four-way valve 14 and enters the latter via a second circuit port 26. The refrigerant finally exits the first four-way valve 14 via an outlet port 28 and is led back to a suction port 29 of the compressor 12.

In heating mode (Fig.1 b), i.e. when the inside compartment of the vehicle is to be heated, the first four-way valve 14 is switched such that the refrigerant exits the first four-way valve 14 via the second circuit port 26 for the inside heat exchanger 20, where it is cooled. The refrigerant then flows to the second four-way valve 30, which leads the refrigerant to the expansion device 18, where it expands and drops in pressure. From the expansion device 18, the refrigerant is led back to the second four-way valve 30 and to the outside heat exchanger 16 where it evaporates. The refrigerant then flows back to the first four-way valve 14 and enters the latter via the first circuit port 24. The refrigerant finally exits the first four-way valve 14 via the outlet port 28 and is led back to the suction port 29 of the compressor 12.

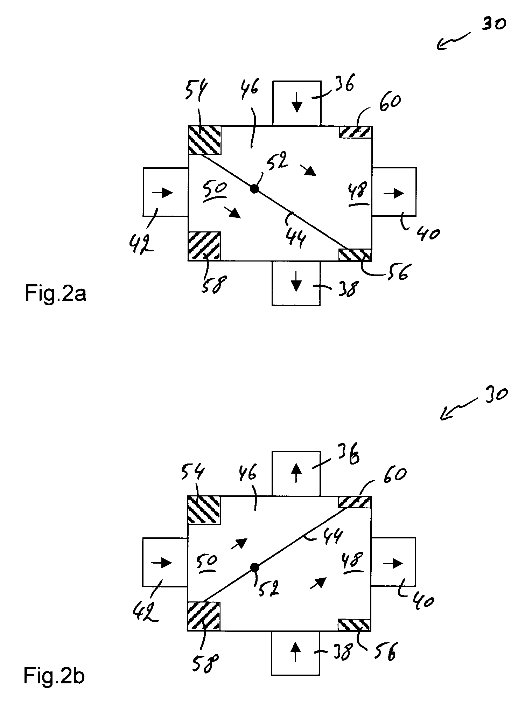

The second four-way valve 30 can be explained in more detail by referring to Fig.2. The second four-way valve 30 comprises a first circuit port 36 for connecting to the outside heat exchanger 16, a second circuit port 38 for connecting to the inside heat exchanger 20, an outlet port 40 for connecting to the inlet port 32 of the expansion device 18 and an inlet port 42 for connecting to the outlet port 34 of the expansion device 18.

The second four-way valve 30 further comprises a flap element 44 pivotable between two end positions. The flap element 44 divides a valve chamber 46 of the second four-way valve 30 into high- and low-pressure chambers 48, 50. In a first end position, as shown in Fig.2a, the first circuit port 36 is in fluid communication with the outlet port 40 via the high-pressure chamber 48 and the second circuit port 38 is in fluid communication with the inlet port 42 via the low-pressure chamber 50. In a second end position, as shown in Fig.2b, the second circuit port 38 is in fluid communication with the outlet port 40 via the high-pressure chamber 48 and the first circuit port 36 is in fluid communication with the inlet port 42 via the low-pressure chamber 50.

The flap element 44 has an off-centre pivot 52 allowing the flap element 44 to be brought into its first or second end positions through a pressure difference of the refrigerant in the high- and low-pressure chambers 48, 50. Indeed, when the heat pump system 10 is operated in cooling mode, high-pressure refrigerant is fed to the high-pressure chamber 48 via the first circuit port 36, whereas low-pressure refrigerant is fed to the low-pressure chamber 50 via the inlet port 42. Due to the pressure difference in the high- and low-pressure chambers 48, 50, the flap element 44 is brought into its first end position as shown in Fig.2a. Similarly, when the heat pump system 10 is operated in heating mode, high-pressure refrigerant is fed to the high-pressure chamber 48 via the second circuit port 38, whereas low-pressure refrigerant is fed to the low-pressure chamber 50 via the inlet port 42. Due to the pressure difference in the high- and low-pressure chambers 48, 50, the flap element 44 is brought into its second end position as shown in Fig.2b.

Such a self-acting valve does not need to be actively actuated by a control system. Depending on the direction of flow through the system, as determined by the first four-way valve 14, the second four-way valve 30 automatically switches so as to deliver the high-pressure refrigerant from one of the heat exchangers 16, 20 to the inlet port 32 of the expansion device 18 and so as to deliver low-pressure refrigerant from the outlet port 34 of the expansion device 18 to the other heat exchanger 16, 20.

The second four-way valve 30 further comprises first and second sealing means 54, 56 for sealing the high- and low-pressure chambers 48, 50 when the flap element 44 is in its first end position; and third and fourth sealing means 58, 60 for sealing the high- and low-pressure chambers 48, 50 when the flap element is in its second end position. High-pressure refrigerant is thereby prevented from leaking from the high-pressure chamber 48 to the low-pressure chamber 50 of the second four-way valve 30.

Referring back to Fig.1, further elements in the heat pump system 10 can be explained. An internal heat exchanger 61 can be fluidly arranged between the outlet port 40 of the second four-way valve 30 and the inlet port 32 of the expansion device 18, and between the outlet port 28 of the first four-way valve 14 and the suction port 29 of the compressor 12. Such an internal heat exchanger 61, sometimes also referred to as superheater, comprises a high-pressure inlet 62 for receiving refrigerant from the second four-way valve 30; a high-pressure outlet 63 for delivering refrigerant to the expansion device 18; a low-pressure inlet 64 for receiving refrigerant from the first four-way valve 14; and a low-pressure outlet 65 for delivering refrigerant to the compressor 12. The internal heat exchanger 61 removes heat from a region between the heat exchanger acting as condenser and the expansion device 18 and transfers it to a region between the heat exchanger acting as evaporator and the compressor 12. More heat can be dissipated in the evaporator, thereby improving the efficiency of the heat pump system 10.

Furthermore, an accumulator/dehydrator device 66 can be fluidly arranged between the outlet port 28 of the first four-way valve 14 and the suction port 29 of the compressor 12, preferably upstream of the internal heat exchanger 61. The accumulator/dehydrator device 66 prevents liquid refrigerant from reaching the compressor 12 by storing excess liquid refrigerant coming from the heat exchanger 16, 20 acting as evaporator. The accumulator/dehydrator device 66 also removes debris and moisture from the system.

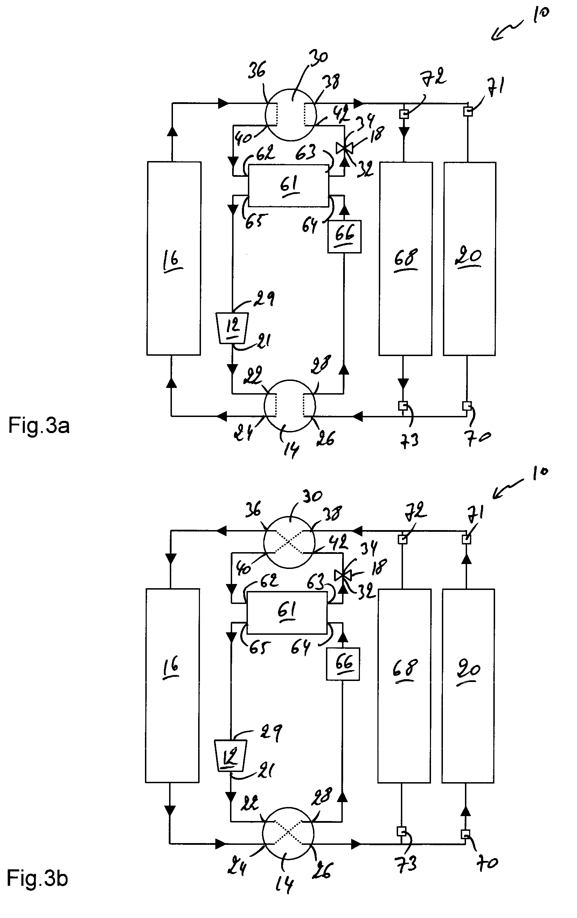

Fig.3 shows a reversible heat pump system according to a second embodiment of the invention. The heat pump system can operate in cooling mode, as shown in Fig.3a, or in heating mode, as shown in Fig.3b. Those parts shown in Fig.3, which are identical to those shown in Fig.1, are denoted by identical reference numerals and will not be described in detail below.

In this embodiment, a further inside heat exchanger 68 is arranged in parallel with the inside heat exchanger 20. The inside heat exchanger 20 and the inside heat exchanger 68 are both connected to the second circuit port 26 of the first four-way valve. The flow of refrigerant through either the inside heat exchanger 20 or the further inside heat exchanger 68 is determined by means of valves 70, 71, 72, 73.

First and second valves 70, 71 are associated with the inside heat exchanger 20 and are arranged upstream, respectively downstream, of the inside heat exchanger 20, so as to open a flow path of refrigerant through the inside heat exchanger 20 when the heat pump system 10 operates in cooling mode and to close a flow path of refrigerant through the inside heat exchanger 20 when the heat pump system 10 operates in heating mode.

Third and fourth valves 72, 73 are associated with the further inside heat exchanger 68 and are arranged upstream, respectively downstream, of the further inside heat exchanger 68, so as to open a flow path of refrigerant through the further inside heat exchanger 68 when the heat pump system 10 is operated in heating mode and to close a flow path of refrigerant through the further inside heat exchanger 68 when the heat pump system 10 operates in cooling mode. The valves 70, 71, 72, 73 can e.g. be check valves or solenoid valves.

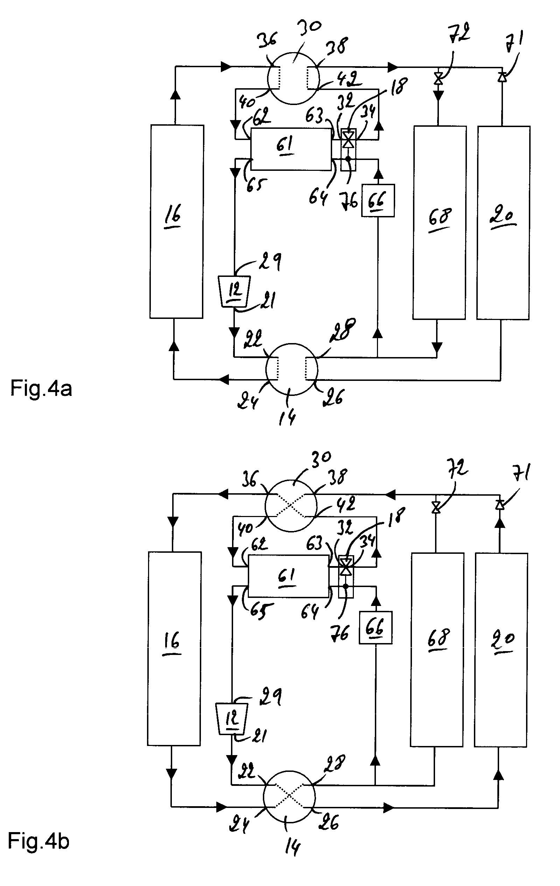

Fig.4 shows a reversible heat pump system according to a third embodiment of the invention. The heat pump system can operate in cooling mode, as shown in Fig.4a, or in heating mode, as shown in Fig.4b. Those parts shown in Fig.4, which are identical to those shown in Fig.3, are denoted by identical reference numerals and will not be described in detail below.

In this embodiment, only the inside heat exchanger 20 is connected to the second circuit port 26 of the first four-way valve 14; the further inside heat exchanger 68 is connected to the outlet port 28 of the first four-way valve 14. Furthermore, the second valve 71 is a check valve preventing refrigerant coming from the second four-way valve from flowing into the inside heat exchanger 20. The third valve 72 is a solenoid valve opening or closing a flow path of refrigerant through the further inside heat exchanger 68 depending on the operating mode of the heat pump system. The first and fourth valves 70, 73 can be dispensed with, thereby saving on cost and weight of the heat pump system 10.

When the reversible heat pump system 10 is operated in cooling mode, the solenoid valve 72 is opened so that refrigerant can flow from the second four-way valve to the further inside heat exchanger 68. At the same time, the check valve 71 prevents the refrigerant from flowing to the inside heat exchanger 20. As the refrigerant exits the further inside heat exchanger 68, it is led to the accumulator/dehydrator device 66 without passing through the first four-way valve 14.

When the reversible heat pump system 10 is operated in heating mode, the solenoid valve 72 is closed and the first four-way valve is switched so as to deliver high-pressure refrigerant from the discharge port 21 of the compressor 12 to the second circuit port 26 of the first four-way valve 14. The second circuit port 26 is only connected to the inside heat exchanger 20, but not to the further heat exchanger 68; the refrigerant can therefore only flow to the inside heat exchanger 20. As the refrigerant exits the inside heat exchanger 20, the closed solenoid valve 72 prevents the refrigerant from flowing to the further inside heat exchanger 68, so that the refrigerant can only flow to the second four-way valve 30.

In the embodiment shown in Fig.4, the expansion device 18 is a thermal expansion valve having sensing means 76 for sensing the pressure and the temperature of the refrigerant returning to the compressor 12. The thermal expansion valve 18 and the sensing means 76 can be arranged in a single element connected to the internal heat exchanger 61.

In the heat pump systems according to the second or third embodiments, the inside heat exchanger 20 always operates as condenser (or gascooler if the refrigerant is CO₂) when refrigerant flows therethrough and the further inside heat exchanger 68 always operates as evaporator when refrigerant flows therethrough.

### List of reference numerals

- 10: heat pump system
- 12: compressor
- 14: first four-way valve
- 16: outside heat exchanger
- 18: expansion device
- 20: inside heat exchanger
- 21: discharge port of compressor
- 22: inlet port of first four-way valve
- 24: first circuit port of first four-way valve
- 26: second circuit port of first four-way valve
- 28: outlet port of first four-way valve
- 29: suction port of compressor
- 30: second four-way valve
- 32: inlet port of expansion device
- 34: outlet port of expansion device
- 36: first circuit port of second four-way valve
- 38: second circuit port of second four-way valve
- 40: outlet port of second four-way valve
- 42: inlet port of second four-way valve
- 44: flap element
- 46: valve chamber
- 48: high-pressure chamber
- 50: low-pressure chamber
- 52: off-centre pivot
- 54: first sealing means
- 56: second sealing means
- 58: third sealing means
- 60: fourth sealing means
- 61: internal heat exchanger
- 62: high-pressure inlet
- 63: high-pressure outlet
- 64: low-pressure inlet
- 65: low-pressure outlet
- 66: accumulator/dehydrator device
- 68: further inside heat exchanger
- 70: first valve
- 71: second valve
- 72: third valve
- 73: fourth valve
- 74: solenoid valve
- 76: sensing means

## Claims

1. Reversible heat pump system comprising:
a compressor, an inside heat exchanger, an expansion device and an outside heat exchanger connected in series with a refrigerant circulating in said heat pump system; and
a first four-way valve for directing said refrigerant from a discharge port of said compressor to said inside heat exchanger, respectively said outside heat exchanger, and for directing said refrigerant from said outside heat exchanger, respectively said inside heat exchanger, to a suction port of said compressor,
**characterized by**
a second four-way valve for directing said refrigerant from said inside heat exchanger, respectively said outside heat exchanger, to an inlet port of said expansion device and for directing said refrigerant from an outlet port of said expansion device to said outside heat exchanger, respectively said inside heat exchanger.

2. Reversible heat pump system according to claim 1, wherein
said first four-way valve is an electronically controlled valve, and
said second four-way valve is a self-acting valve.

3. Reversible heat pump system according to claim 1 or 2, wherein said second four-way valve comprises:
a first circuit port for connecting to said outside heat exchanger;
a second circuit port for connecting to said inside heat exchanger;
an outlet port for connecting to an inlet port of said expansion device; and
an inlet port for connecting to an outlet port of said expansion device,
a flap element pivotable between two end positions wherein,
in a first end position, said first circuit port is in fluid communication with said outlet port and said second circuit port is in fluid communication with said inlet port, and
in a second end position, said second circuit port is in fluid communication with said outlet port and said first circuit port is in fluid communication with said inlet port
said flap element being brought into said first or second end position through a pressure difference between said refrigerant at said first circuit port and said refrigerant at said second circuit port.

4. Reversible heat pump system according to claim 3, wherein said flap element has an off-centre pivot.

5. Reversible heat pump system according to claim 3 or 4, wherein
first and second sealing means are arranged in said second four-way valve for sealing a high and a low side within said second four-way valve when said flap element is in its first end position; and
third and fourth sealing means are arranged in said second four-way valve for sealing a high and a low side within said second four-way valve when said flap element is in its second end position.

6. Reversible heat pump system according to any of the previous claims, comprising a further inside heat exchanger, wherein
said inside heat exchanger and said further inside heat exchanger are arranged in parallel;
flow of refrigerant through said inside heat exchanger is in a first direction and flow of refrigerant through said further inside heat exchanger is in a second direction opposite to said first direction; and
the direction of flow through said inside heat exchanger and said further inside heat exchanger is determined by means of valves.

7. Reversible heat pump system according to claim 6, wherein
both of said inside heat exchanger and said further inside heat exchanger are connected to a circuit port of said first four-way valve;
first and second valves are associated with said inside heat exchanger, said first valve being arranged upstream of said inside heat exchanger, said second valve being arranged downstream of said inside heat exchanger; and
third and fourth valves are associated with said further inside heat exchanger, said third valve being arranged upstream of said further inside heat exchanger, said fourth valve being arranged downstream of said further inside heat exchanger.

8. Reversible heat pump system according to claim 6, wherein
one of said inside heat exchanger and said further inside heat exchanger is connected to a circuit port of said first four-way valve, the other one being connected to an outlet port of said first four-way valve;
a check valve is associated with one of said inside heat exchanger and said further inside heat exchanger; and
a solenoid valve is associated with the other one of said inside heat exchanger and said further inside heat exchanger.

9. Reversible heat pump system according to any of the previous claims, further comprising an internal heat exchanger fluidly arranged
between said second four-way valve and an inlet port of said expansion device, and
between said first four-way valve and a suction port of said compressor.

10. Reversible heat pump system according to any of the previous claims, further comprising an accumulator/dehydrator device fluidly arranged between said first four-way valve and a suction port of said compressor.

11. Reversible heat pump system according to any of the previous claims, wherein said refrigerant is R-12, R-134a, R152a or CO₂.

12. Reversible heat pump system according to any of the previous claims, wherein said expansion device is an electronic expansion valve, a thermal expansion valve or an orifice tube.

13. Reversible heat pump system according to claim 12, wherein said expansion device is a thermal expansion valve and wherein said thermal expansion valve comprises means for sensing temperature and pressure of said refrigerant upstream of a suction port of said compressor.
